# EUROPEAN PATENT APPLICATION

(11) **EP 4 249 994 A1**
(43) Date of publication of application: **27.09.2023**
(21) Application number: 22305344.8
(22) Date of filing: 23.03.2022
(51) Int. Cl.: G02C 13/00

(54) **IMPROVED DETECTION OF AN OUTLINE OF A SPECTACLE FRAME**

(71) Applicant: Essilor International, 94220 Charenton-Le-Pont (FR)
(72) Inventor: LE CAIN, Aurélie, 94000 CRETEIL (FR); DEBIEUVRE, Amandine, 75012 PARIS (FR); GUEGAN, Julien, 94000 CRETEIL (FR)
(74) Representative: Plasseraud IP

(57) **Abstract**

The present disclosure relates to a computer implemented method for measuring at least one fitting parameter of a spectacle frame on a wearer, comprising :
- obtaining at least one picture of the wearer wearing said spectacle frame,
- determining at least an outline of the spectacle frame, so as to derive from said outline at least one fitting parameter of the spectacle frame on said wearer,
wherein said outline determination is implemented by an artificial intelligence.

## Description

### Introduction

The present disclosure is related to measurements of fitting parameters of a spectacle frame on a wearer.

The present disclosure can be applied for example to virtual try-on ("VTO") of spectacles desired by a user, online typically. For example, such a virtual try-on can be implemented by the wearer using a smartphone and taking 2D pictures of his face. Alternatively, an eye care professional ("ECP") can implement a more complex picture (3D points cloud) for example.

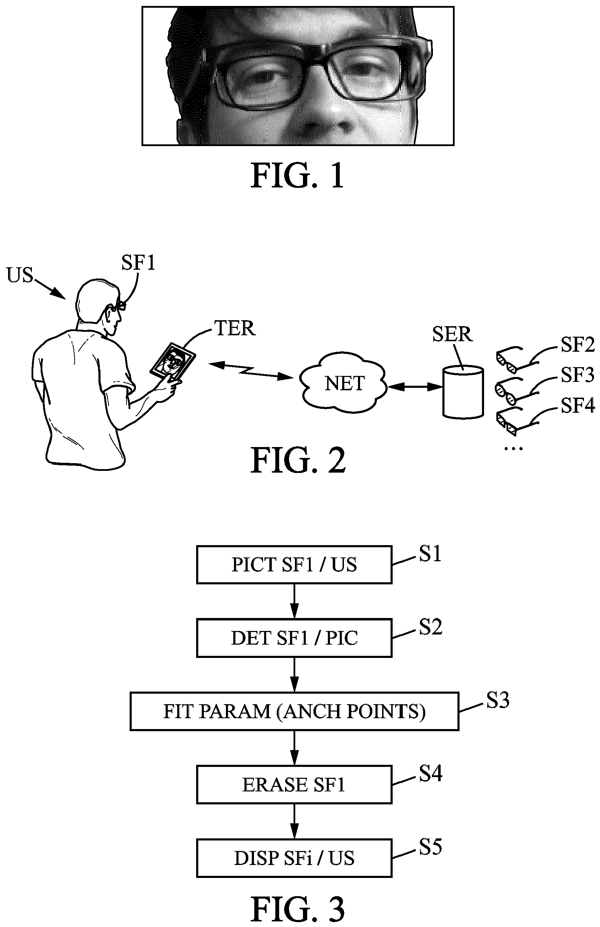

Until now, the known virtual try-on solutions present mostly the three following issues:
- No solution proposes to detect automatically the spectacle frame (and more particularly its outlines, and more particularly at least its external outline). For example and not limitedly, it can be wished to erase, in the taken pictures, the spectacle frame currently worn by a wearer so as to replace it by another frame that the wearer can desire to order. An example of a usual known solution is shown on figure 1;
- In most of the know solutions, the frame is not properly scaled on the wearer head (as shown also on figure where the virtual frame appears too small);
- The virtual spectacles and more particularly their eyeglasses which are virtually displayed on the wearer's face are often distorted and, during high movements of the wearer, the virtual eyeglasses are disconnected from the face of the wearer. No known solution is robust with high head movements.

The issues observed with the VTO prior art methods might be due to difficulties in measuring correctly fitting parameters of the real spectacles on the wearer's face, so as to derive from these parameters some important anchor points based on which the virtual spectacles can be displayed on the face of the wearer.

The issue of not getting liable fitting parameters might be due furthermore to poor quality of identification of the real spectacles on the pictures of the wearer.

This problem can be met typically in another application, as for example, when an eye care professional (for example an optician) tries to determine fitting parameters on a wearer, typically when trying new spectacles wished by the wearer.

The measurements of the fitting parameters, in this kind of application, are usually obtained from images of the wearer, while wearing the spectacles. The images can be in two or three dimensions (2D and 3D). One step before calculating the fitting parameter is to outline the so called "bounding box" of the spectacle frames. This step is also called below the "frame detection".

This step can involve for example the frame shape determination and/or the lens shape detection on the wearer's face.

Today, the detection of the frame is not automatic. Usually, an eye care professional (ECP) uses a computer storing at least temporarily pictures of the wearer (wearing the spectacles) and has to move and click manually a computer mouse (or equivalent means) to outline a bounding box around the frame on each picture, before processing the fitting parameters determination.

This step of outlining the frame (and/or lenses in the frame) is tedious for the ECP. Errors, or at least inaccuracies so as to go faster, can be made and the quality of determination of the fitting parameters can be poor then.

The present disclosure aims to improve the situation.

### Summary

To that end, it proposes a computer implemented method for measuring at least one fitting parameter of a spectacle frame on a wearer, the method comprising :
- obtaining at least one picture of the wearer wearing said spectacle frame,
- determining at least an outline of the spectacle frame, so as to derive from said outline at least one fitting parameter of the spectacle frame on said wearer,
wherein said outline determination is implemented by an artificial intelligence.

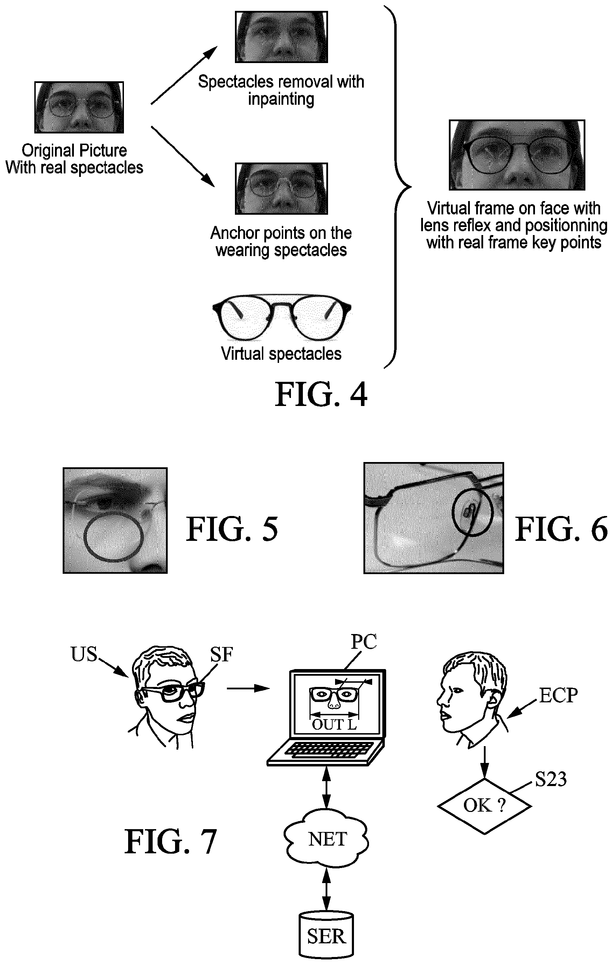

The above wording "fitting parameter" is to be interpreted in a broad sense. It can aim typically a position of a specific part of the spectacle frame relatively to the wearer's face such as, for example, the spectacle bridge on a nasal part of the wearer as shown in figure 4 commented below, and/or a spectacle branch position relatively to a temple of the wearer, etc. It can aim also fitting parameters in optometric field such as a pupillary distance, fitting heights, eye rotation center position, pantoscopic angle, wrap angle, eye-lens distance and/or eye rotation center-lens distance, etc., when the wearer wears said spectacle frame.

In a first embodiment where an image of a virtual frame is replacing an image of a real spectacle frame worn by the wearer on said picture of the wearer, the method can comprise:
- Identifying an outline of the real spectacle frame worn by the wearer in said picture,
- Determining anchor points of the real spectacle frame on the wearer's face, from said real spectacle frame outline identification, and
- Using said anchor points to place, in said picture, an image of the virtual frame.

In an example described below, such an embodiment can be implemented online in real time, in a virtual try-on application. Alternatively, it can be implemented in other applications such as for instance a virtual fitting application where 3D models of the spectacle frame and of the wearer's face are acquired and post processed so as to provide later a realistic view of personalized spectacles perfectly fitting the wearer's face.

In the aforesaid first embodiment, the method can comprise more particularly :
- Replacing, in said picture, an image texture of said real spectacle frame, delimited by the identified outline, by an image texture of the wearer, and
- Using said anchor points to place, in said picture, an image texture of the virtual frame.

Using the anchor points enables to place the image texture of the virtual frame at a scale and angle fitting conditions used for taking the original picture.

The aforesaid "replacing" can be performed for example by image processing or more sophistically by a neural network to in-paint said image texture of the wearer, said image texture of the wearer comprising at least one element among a wearer's skin, a wearer's eyebrow, a wearer's eye, and a combination thereof.

In the aforesaid first embodiment, said anchor points can be determined from relative positions of characteristic points of the real spectacle frame and characteristic points of the wearer's face.

Typically, characteristic points of the real spectacle frame can be boxing points defining the height and width of the frame, its bridge, etc. Characteristic points of the wearer's face can be its nasal part, temples, eyebrows, etc.

At least one picture of the wearer can be taken so as to obtain 3D information of the real spectacle frame worn by the wearer, and multiple anchor points combinations can be evaluated and adjusted according to different head orientations and positions of the wearer. The picture can be an infrared imaging picture (such as for example of the type obtained from an infrared camera), or alternatively from a plurality of images taken with different head orientations and positions of the wearer (with a traditional camera "red-green-blue") to have a stereoscopic view.

The aforesaid anchor points themselves can comprise at least one of:
- a middle point of a bridge of the real spectacle frame,
- boxing points of lenses of the real spectacle frame,
- ends of frame branches (or "temples" hereafter),
- segment of the real spectacle frame including at least one of said bridge and a nasal part.

The method can furthermore comprise, in order to take into account a realistic effect of the glasses of the virtual spectacle :
- identifying furthermore, in said picture, real lenses which are mounted in the real spectacle frame, and
- replacing said real lenses by virtual lenses in said picture,
and a neural network uses data of ametropia of the wearer for displaying in said picture virtual lenses corresponding to said ametropia of the wearer.

The aforesaid neural network can be for example a combination of several neural networks such as a so-called "generative adversarial network" (or "GAN") as described in an example of embodiment below.

For example, if the height of the real spectacles is shorter that the virtual ones, a virtual prolongation of the real glasses is to be made so as to fit with the virtual spectacles. In order to have a realistic effect, it is preferred that the ametropia is taken into account so as to make appear a uniform aspect of the virtual lenses displayed in the virtual frame.

The color of the displayed lenses can be modified also according to a wearer's prescription or according to a particular choice of the wearer.

In an embodiment, the spectacle frame outline determination can be performed for example by a module implementing a model of semantic segmentation to identify a plurality of distinct portions of said spectacle frame in said picture.

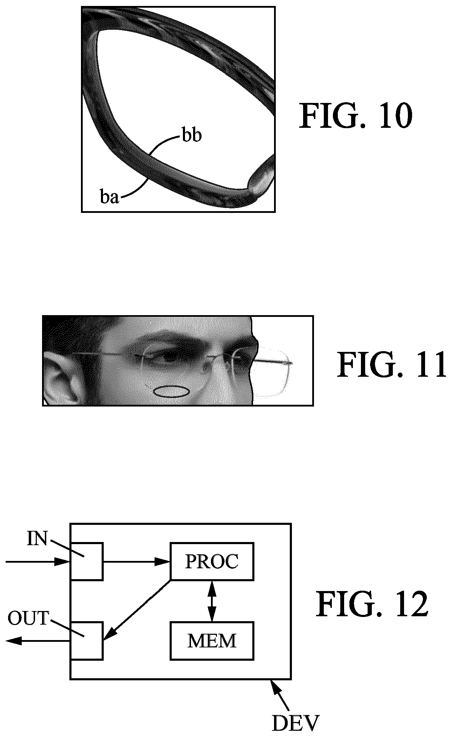

This module can be materialized by a processor cooperating with a programmed memory as shown in figure 12 commented below.

Typically, in this embodiment, the method can comprise:
- a preliminary step of training a deep learning neural network on an annotated database comprising a plurality of portions of learning pictures of spectacle frames segments, each learning picture portion being associated with a mask describing a frame element appearing in said learning picture and a position of this frame element on said learning picture, so as to build said model of semantic segmentation.

In a second embodiment, alternative or complementary to the first embodiment, the outline determination is performed under an eye care professional's control, and the method comprises:
- implementing said artificial intelligence to draw on said picture at least characteristic points delimiting the determined outline of the frame, and displaying, on a computer screen at a disposal of the eye care professional, said picture with said characteristic points,
- implementing a human/machine interface to receive an input from the eye care professional, of data of a validation or of an invalidation of the outline determination implemented by said artificial intelligence, and
- updating said artificial intelligence on the basis of said input data.

Typically in a context where the wearer tries a real spectacle frame that he/she has chosen and to be ordered (for example in a shop), the eye care professional (or "ECP" below) can check the fitting parameters (so as to be sure that, for example, this chosen frame will be compatible with lenses respecting the wearer's prescription for instance).

The aforesaid characteristics points can be boxing points (defining boxing lines or a function using such characteristics points to delimitate the outline of the frame).

For example, updating the artificial intelligence can be an updating of a neural network model when a neural network is used.

In this second embodiment, said data of invalidation of the outline determination can comprise for example data of points of the outline, corrected by the eye care professional.

Alternatively or in addition, the eye care professional can:
- judge for example the result of a calculation of a mathematical function applied on these points and which gives (for example by interpolation) the determined outline in output, and,
- according to that judgement, can validate or invalidate finally the outline determination.

The aforesaid artificial intelligence can learn both from that output: the characteristic points corrected by the eye care professional and/or the final determined outline validated or invalidated by the eye care professional.

For example, the eye care professional can add one or several characteristic points to the bounding box so as to correct the determined outline.

The eye care professional can add points to the outline so as to provide an accurate shape of it. Possibly also, at least some points may not be directly points of the outline but rather points of control so as to give an accurate fit of the outline, such as for example one or several control points of a Bezier curve.

The data of points of the outline, corrected by the eye care professional, can be transmitted from the human/machine interface, for example with an identifier of the eye care professional, and a counter value of a number of data of outline points corrected by said eye care professional is stored in a memory along with said identifier of the eye care professional. This embodiment makes it possible then to give for example a reward to the eye care professional who sent a number of corrected data above a threshold.

For example, the aforesaid artificial intelligence can implement a deep learning neural network, being trained on the basis of the eye care professional data of a validation or of an invalidation of the outline determination.

Therefore, a machine learning specific to a given ECP (own practice) and/or to his/her shop and equipment (camera, light, etc.) can be provided.

The neural network can be trained furthermore on the basis of eye care professionals' data of validation or of invalidation of frame outline determinations, transmitted to a collaborative platform.

This embodiment makes it possible then to enrich the artificial intelligence with other ECPs feedbacks.

For example, the outline determination, when performed on spectacles comprising lenses, comprises a determination of at least one lens contour.

This embodiment is detailed below with reference to figure 10.

The outline determination can be performed on the basis of a plurality of pictures taken from different view angles relatively to the wearer and the outline determination can be performed on spectacles comprising bevels housing lenses, said outline determination comprising thus a determination of an outline of said bevels.

The present disclosure aims also at a device for measuring at least one fitting parameter of a spectacle frame on a wearer, comprising a processor to implement the method presented above.

The present disclosure aims also at a computer program comprising instructions to implement the method when such instructions are executed by such a processor.

It aims also at a non-transitory computer storage medium, storing the instructions of such a computer program.

### Presentation of the figures

More details and advantages of the present disclosure will be understood when reading the following description of embodiments given below as examples, and will appear from the related drawings where:
- Figure 1 shows an example of superposition between a virtual frame and a real frame in a virtual try on application, showing also in this example a bad scaling of the virtual frame compared to the real one,
- Figure 2 shows a system to implement a virtual try-on application, in an example of embodiment,
- Figure 3 shows steps of a method to implement a virtual try-on application, according to an example of embodiment,
- Figure 4 shows the original picture with real eyeglasses (left image), the spectacle removal with inpainting (top image), key points on the worn spectacles such as its bridge here (bottom image), and the virtual try-on image (right image) showing virtual spectacles replacing the real ones,
- Figure 5 shows a case where the frame is not fully defined and may require the help of an ECP,
- Figure 6 shows another case where pads of the eyewear can alter the frame outline automatic determination and may require the help of an ECP,
- Figure 7 shows a system to implement a machine learning of an ECP corrections, according to an example of embodiment,
- Figure 8 shows steps of a corresponding method to implement the machine learning of an ECP corrections, according to this example of embodiment,
- Figure 9a shows a well detected frame contour, while Figure 9b shows a frame contour to be corrected by the ECP, and Figure 9c shows detection of characteristic points by an artificial intelligence algorithm based on machine learning,
- Figure 10 shows an embodiment to automatically detect an eyewear bevel,
- Figure 11 shows an example of a zone requiring a checking or an adjustment from an ECP in a particular case,
- Figure 12 schematically shows a device comprising a processor to implement the method defined above.

### Detailed description

### First embodiment

A virtual try-on method (VTO) is described below with reference to figure 2, as a first possible application of the present disclosure.

A user US wears real spectacles SF1 and can take one or several pictures of his face with an equipment such as a smartphone or a tablet TER (or possibly also a specific device in an ECP store). The equipment TER is connected, in this example of figure 2, to a distant server SER through an extended network NET. The server SER can propose different models of spectacle frames SF2, SF3, SF4, etc. to be chosen by the wearer US for a virtual try-on. The user US chooses then one of the models SFi (with i = 2, 3, 4, etc.) and data of a digital image of the frame SFi are downloaded on the equipment for the implementation of the VTO by the equipment TER. Alternatively, the digital images of the wearer's pictures acquired by the equipment TER can be sent to the server SER for the implementation of the VTO by the server SER.

The VTO implementation either performed by the equipment TER or the server SER is described now with reference to figure 3.

In a first step S1, the user US is wearing his own real spectacles SF1 and uses a VTO software running for example on his equipment TER filming a video of the face of the wearer US for example. During the video filming, multiple positions of head orientations can be asked to the user.

In step S2, the real spectacle frame SF1 on the wearer's face are detected in the filmed digital images by artificial intelligence algorithms. The frame SF1 can be segmented on several parts such as its bridge, face view outline, rims, temples, hinges, etc.

The frame detection can be implemented by using a deep learning neural network that is trained on an annotated database where each image is associated with a mask describing the position of each element of the frame. Typically, in this preliminary phase of machine learning, a user can indicate to the machine what is a spectacle frame texture, what is a skin texture, what is a bridge texture for example, etc., in a plurality of portions of learning pictures. This training phase can result in the building of a model of semantic segmentation to identify thus several distinct parts of any spectacle frame. When the preliminary training phase is completed, the neural network is able to predict the position of each element of the frame on whole new images.

In step S3, so-called "anchor points", characterizing the position of the spectacle frame SF1 on portions of the wearer's face are defined and saved in memory. Such anchor points of the position of the frame SF1 on wearer's face can be defined once the frame outlines are detected thanks to the output of the neural network. Such anchor points are related to fitting parameters such as, for example, the middle point of the bridge, boxing points of the lenses, ends of the temples, and/or the segment of the spectacles including the bridge and nasal part (reverse U as shown in figure 4 described below). Multiple anchor points combinations can be evaluated and possibly adjusted according to head orientation and position. With a 3D information of the head (stereoscopic image built from at least two images taken with different angles, or alternatively 3D image obtained with a specific sensor like time of flight or Lidar or infrared camera such as Kinect camera), the anchor points can be defined typically by several distances between characteristic points, such as for example, characteristic points of the spectacles and characteristic points of the face.

In step S4, the spectacles of the wearer are erased from the picture/video. This step can be performed by image processing combined to the neural network.

Several embodiments can be implemented for step S4.

One possible method can be based on the use of a pixel tint value of a median or average of available pixels neighboring the pixels of the frame. Artifacts, such as a "frame ghost", may still appear on the final image.

Another method, more complex but more robust, uses a neural network to in-paint the wearer's skin or eyebrows or eyes. This method enables then the generation of some missing parts of the face (like eyes for example on a photo poorly framed). It is possible then to suppress moreover the worn spectacles eyeglasses in view to remove also the lens effect, so as to replace the real lenses by virtual ones of the virtual tried-on spectacles (as explained below with reference to step S5). This can be useful when the size of the virtual frame is bigger than the real one and/or if it is wished to use the picture of the wearer without any eyeglasses. Several models (with different neural networks like the so-called "GAN" for "generative adversarial network") can be generated for different ametropia levels. The appropriate model is selected in accordance with the ametropia (given by the wearer according to his/her current prescription for example) to minimize the lens distortion on the wearer face when the real frame is erased.

In step S5, virtual spectacles can be displayed on the wearer's face in accordance with the anchor points detected in step S3.

Based on these anchor points and, thanks to the real frame detection, the position and orientation of the virtual spectacles are defined to be accurately represented on the wearer face.

Depending on the head orientation of the wearer, the anchor points can be updated and the most important ones are used. For example, it is possible to evaluate at any moment the quality of the different anchor points and select the ones that are most useful.

Finally, the virtual frame can be positioned according to its own shape, using furthermore data of the computed anchor points and of the current head orientation.

An example of successive pictures illustrating the global process is represented in figure 4. In appears on figure 4 that the VTO provides the same virtual frame positioning as the real frame.

In view to avoid distortion of the lenses in the VTO images, characteristic points of a real frame worn by the wearer can be used here again. The real frame is erased from the picture (for example by an inpainting method) and the attachment points are used to position the virtual frame on the face. From a wearer's point of view, the VTO is made with his/her corrective lenses. One first advantage for the wearer is that he/she can keep his/her corrective glasses during the VTO (essential for high ametropia), and see correctly the result of the VTO. The second advantage is that the effect of the lenses is taken into account during the VTO.

### Second embodiment

The determination of the fitting parameters (parameters of frame fitting on wearer's face, such as the bridge on nasal part, temples, etc.) is important then for a virtual spectacles try-on application. Simple artificial intelligence algorithms can convene for identifying the frame as presented above.

However, the accurate determination of fitting parameters (frame fitting parameters or more generally other fitting parameters such as optometric fitting parameters) is crucial in another application of the present disclosure which relates to spectacles ordering when an ECP determines fitting parameters on the wearer, typically when trying new spectacles that the wearer wishes to order.

Especially, a robust identification of the frame outline is a key point of the success of the 2D and 3D fitting parameters evaluation in this application involving an ECP. The frame detection must be robust in terms of head angles, light environment, type of frames, etc.

For instance, detecting the correct contour of the lenses as shown in figures 5 and 6 can be a difficult task for machine learning, because some features/elements can make this detection complex is some particular cases. As shown on figure 5, for rimless eyewear, contrast/visibility of the contour is limited. As shown, on figure 6, the pads of the eyewear may lead to noncorrect frame shape close to their location. The shape of frame bevel can lead also to confusion. The frame shape may be even more difficult to correctly detect when the head is tilted (as shown in figure 6 when the eyewear has angle).

A possible issue with simple labelling (i.e. indicating to a learning machine, in an image, what is a skin texture, what is a frame texture, what is a lens texture, etc.) can be that the resulting artificial intelligence might be sensible to conditions variations (such as lighting, backgrounds, etc.). In order to have a robust algorithm, lots of labelled data can be needed and the issue is still the ability to collect such well labelled data.

In this embodiment, the algorithm robustness is improved thanks to ECP inputs and feedbacks data.

The advantage of this solution is that machine learning algorithms can be more efficient and robust to any conditions with a large dataset provided by the ECPs.

To obtain 3D fitting parameters measurements, it can be proposed for example to :
- detect the frame contour on several 2D pictures,
- Calculate the head angles for these 2D pictures,
- Using contour, head angles and a 3D parametric shape of the frame and the face (or a calculated 3D shape of the frame with triangulation),
- Calculate a 3D parametric shape of the frame by optimization in accordance with the head position, and
- Based on this 3D frame shape, evaluate the fitting parameters in 3D (such as wrap and pantoscopic angles, etc.).

To detect the frame contour on 2D pictures, the present embodiment provides a machine learning algorithm using a database of pictures already labeled, with a possible continuous learning using new pictures labeled by the ECPs.

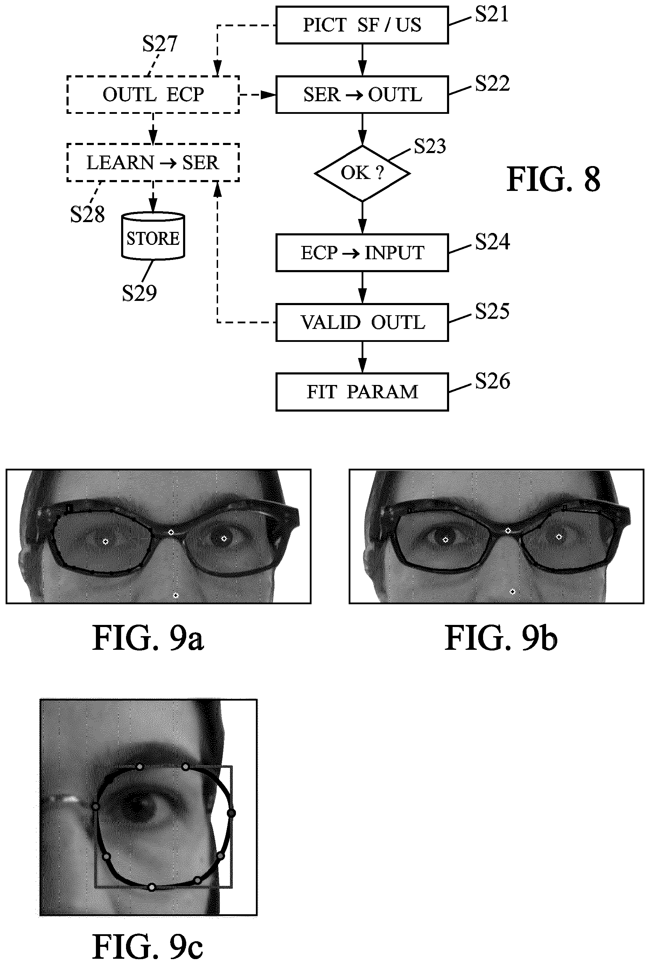

The algorithm is developed thanks to its iterative improvement with ECPs collaboration. This collaboration is illustrated in figure 7 where a wearer US tries real spectacle frame SF. The eye care professional ECP uses a computer or a tablet PC (or simply a smartphone for example) equipped with a camera to take pictures of the wearer US (and the frame SF). The computer PC can implement the steps of figure 8 presented below or can access to a distant server SER through an extended network NET.

For example, as presented in figure 8:
- In step S21, the ECP takes a picture of the wearer wearing the frame SF. This picture is sent to the cloud (NET, SER) in the form of a dataset of a digital image.
- In step S22, an algorithm V0 running on the server SER calculates some points of the frame shape C0 on the digital image (in step S27). This frame shape C0 is sent back and displayed on the computer screen PC to the ECP.
- In step S23, the ECP can approve the frame shape or move one or several points of the frame shape C0 to adjust the contour.
- In step S24, thanks to this ECP input, new positions of the points can define a more accurate new frame shape C1.
- In step S25, the dataset of accurate shape C1 is sent to the cloud.

The server SER updates then the recognition algorithm in step S28, as a process of machine learning. Continuously, the machine learning algorithm (involving for example neural networks) can be updated with the new data provided by the ECP through his/her computer PC. If the frame detection improvement is better (for example once the ECP definitely validates the frame outline in step S25), the algorithm executed by the server can be updated and stored in step S29.

Iteratively, version V0 of the algorithm used in a new step S22 can be based on the best previous algorithm V1 used in precedent run of step S25.

This process allows an easy and remotely update of the algorithm.

For example, each week the algorithm can be updated with the new labelled data collected in ECP shops.

The algorithm could be specific to a shop (lighting conditions, specific features of the camera taking pictures, etc.). The algorithm V0 is a base but the new contour labelling and new learning could be specific to a shop or to an ECP.

For example, one ECP1 can need a very high precision and takes some time to label precisely each contour with his/her own appreciation. Another ECP2 might prefer a simple bounding box around the frame and only adjust four points for example to define the contour.

These two ECPs can have their own algorithm running on their computer PC. One can therefore understand then that the method of figure 8 can be implemented finally on a single computer PC, without the use of the cloud and in particular of a distant server SER. In this embodiment, the neural network running on the computer PC can be trained with the EPC input data.

However, of course, the model of neural network can be :
- generalized to a plurality of ECPs,
- but also possibly individualized : a continuous learning algorithm supplied with data of only one ECP/shop,
- or possibly also segmented : a network for different ECPs, being segmented with their needs and habits.

The process of proposing automatically eyewear contour, then having feedback from users to adjust the contour and feed a learning machine makes it possible to improve continuously the detection of the eyewear contour. It frees also the ECP from the need to define manually the frame contour which can be a tedious task. The ECP needs only to check consistency of adjustment, and eventually to locate some points of contour which might be uncertain for the machine under some conditions.

The machine can for example display to the ECP an assessment of level of confidence of the proposed identified contour, in order to provide an incentive to the ECP to check more accurately the determined contour.

In this embodiment involving an ECP, two examples of embodiment can be implemented, as detailed below. The first example relates to an accurate contour determination of lenses of the frame (figures 9a and 9b). The second one relates to lens contour determination based on the identification of characteristic points and implementing an extrapolation of the lens contour based on the identified characteristic points (figure 9c).

In the first example of embodiment, an algorithm for example based on machine learning (called M0) detects the shape of the two lenses (or the frame contour) in a previously taken picture. A set of points around each lens can be detected then, extracted and displayed on the picture for the ECP (on his/her computer screen, laptop or tablet). The ECP checks these points and eventually adjusts the set of points surrounding each lens. Then a lens contour is extrapolated, and corresponding data (contour, adjusted set of points, picture) are sent to the cloud (network-server SER). These data are used for feeding the machine learning algorithm M0 to improve it (becoming an updated version M1). After this, the EPC, in a next determination, will have the possibility to check a new detected set of points of a lens on a new frame. The detection of these new points will be improved thanks to the current adjustment of the EPC, improving the algorithm form M0 to M1. Figure 9a shows a well detected frame contour, while Figure 9b shows a frame contour to be corrected by the ECP.

In the second example of embodiment, figure 9c shows detection of characteristic points by an artificial intelligence algorithm based, once again in this embodiment, on machine learning. The algorithm detects some characteristic points of contact of the lens with the bounding box of the frame and extrapolates the contour of the lens from these characteristic points. The ECP can correct the extrapolation when needed. To that end, the ECP has to move few characteristic points only on the contour of the lens. Once the feedback from the ECP is sent to the cloud, the algorithm learns this improved contour detection, corrected by the ECP.

It is possible to process multiple pictures, corresponding to different head postures (for 3D reconstruction of an eyewear for example). The ECP (or a user of a VTO application) can adjust contour on at least two images, since providing adjustments for different head postures usually provides more robust learning. One possible case of that kind of frame recognition can be typically the eyewear bevel detection, as shown in figure 10. Here, the front frame bevel **ba** can be detected thanks to at least a portion of a front picture of the wearer's face, while the back frame bevel **bb** can be detected from a rear view of spectacles or from a side view of the wearer.

In this case, the Algorithm receives at least two images of two postures, and provides two contours for each posture, and the ECP adjusts these two contours. Each adjustment is then provided to machine learning.

An explanation is given below about the determination of a contour from at least one pictures (more than one picture).

To avoid the ECP to provide wrong adjustments, it may be proposed to the ECP to provide at least two images (preferably having two different postures) with two adjusted contours Ca,Cb.

A consistency step can then be performed to check whether both adjusted contours are consistent:
- one of the 2D contour Ca is modified according to six degrees of freedom (three translations X-Y-Z, and three rotations X,Y,Z) so as to match as close as possible with second contour Cb,
- then, after the matching of Ca on Cb, the difference between them is checked to be low (below a predetermined threshold), in particular in zones for which adjustment were done,
- the adjusted contour Ca = Cb is confirmed only if the difference is below the aforesaid threshold (for instance 0,2mm).

Since contour Ca/Cb is only 2D, if 3D contour information is not available, it may be possible to optimize the aforesaid six degrees of freedom with adding supplementary parameters (for instance frame curvature) to determine the best match. Doing so, the eyewear missing 3D data can be obtained from only two images corresponding to different postures.

An explanation is given below about the expected confidence on accuracy of the proposed contour, and providing to the user a level of confidence of the proposed result, so that the user needs to adjust contour if the level of confidence is low.

The algorithm is providing a contour, and a level of confidence that can be simple for the user (for example, a binary expected information such as: "OK" or "CONFIRMATION REQUIRED").

The level of confidence can be determined for instance based on the adjustment done by other ECPs on similar frames or frame shapes : if very few adjustments are done (for instance less than 5%), level of confidence is high, otherwise level of confidence is medium (>5%) or low (>10% adjustments).

Now regarding the processing of the response from the ECP (such as "OK" or "NON-OK"), when the algorithm shows in output the contour of the lens, the ECP can answer if the contour is OK or non-OK. Then, the non-OK contour can be sent to a specific place to be re-labelled by a technician team.

It is possible also to determine locations of the point of contour requiring adjustment from the user. It is possible to guide the ECP on the location of the contour point requiring adjustment. For instance, based on similar eyewear and previous adjustment proposed by another ECP, the contour (or bounding box) provided before adjustment can highlight location to be checked/adjusted (for example with a color code), as shown in figure 11.

ECPs can be involved once again in the aforesaid technician team. An incentive for users or especially EPCs can be proposed in view to get their adjustment pushing. It may be not perceived as beneficial for ECPs to contribute to better machine learning, since this operation may be time consuming for them. Some of them may decide that the proposed contour is enough accurate, and would not provide any feedback, preventing so further improvement on machine learning. To create some incentive, it is possible to propose the use of a collaborative platform from which ECPs can download similar frame shapes and to propose the storage therein of contours they could adjust/correct.

Alternatively, a reward can be provided to ECPs being the most active for providing correct adjust contour: discount, fees, free articles.

In order to implement technically this alternative, an identifier associated to the ECP can be stored in a database in correspondence with a counter of the number of proposed adjustments and/or quality of adjustment feedbacks returned by this ECP. A reward based on this indicative counter can be contemplated.

With reference now to figure 12, a hardware device DEV for implementing in general the method described above in either the first or second embodiment can comprise typically
- A memory MEM for storing at least instructions of a computer program according to the present disclosure,
- A processor PROC accessing to memory MEM for reading the aforesaid instructions and execute then the method of the present disclosure,
- An input interface IN to receive for example image data (of the wearer's face, of the real frame, and/or of the virtual frame),
- An output interface OUT to deliver at least characteristic points of a frame outline for example, and also possibly fitting parameters values.

Of course, the present disclosure is not limited to the examples given above.

Typically, fitting parameters can be obtained from 3D images or from several 2D images having different angles of view. Doing so, a plurality of fittings parameters can be obtained. However, the detection can be performed also on a standard single 2D picture to evaluate still some important fitting parameters such as the fitting height for example.

Moreover, the first and second embodiments are described above as being separated. However, it is possible to provide, as possible inputs in the aforesaid annotated database of the first embodiment, data issued from the ECPs which can be corrected contours according to the second embodiment, or possibly new contours wholly manually detected by ECPs.

## Claims

1. A computer implemented method for measuring at least one fitting parameter of a spectacle frame on a wearer, comprising :
- obtaining at least one picture of the wearer wearing said spectacle frame,
- determining at least an outline of the spectacle frame, so as to derive from said outline at least one fitting parameter of the spectacle frame on said wearer,
wherein said outline determination is implemented by an artificial intelligence.

2. The method of claim 1, further comprising:
- After determining said outline, replacing, on said picture of the wearer, an image of the spectacle frame worn by the wearer by an image of a virtual frame,
And wherein the method comprises :
- Identifying an outline of real spectacle frame worn by the wearer in said picture,
- Determining anchor points of the real spectacle frame on the wearer's face, from said real spectacle frame outline identification, and
- Using said anchor points to place, in said picture, said image of the virtual frame.

3. The method of claim 2, comprising :
- Replacing, in said picture, an image texture of said real spectacle frame, delimited by the identified outline, by an image texture of the wearer, and
- Using said anchor points to place, in said picture, an image texture of the virtual frame.

4. The method of claim 3, wherein said replacing is performed to in-paint said image texture of the wearer, said image texture of the wearer comprising at least one element among a wearer's skin, a wearer's eyebrow, a wearer's eye, and a combination thereof.

5. The method according to anyone of claims 2 to 4, wherein said anchor points are determined from relative positions of characteristic points of the real spectacle frame and characteristic points of the wearer's face.

6. The method according to claim 5, wherein at least one picture of the wearer is taken so as to obtain 3D information of the real spectacle frame worn by the wearer, and multiple anchor points combinations are evaluated and adjusted according to different head orientations and positions of the wearer.

7. The method according to anyone of claims 2 to 6, wherein said anchor points comprise at least one of :
- a middle point of a bridge of the real spectacle frame,
- boxing points of lenses of the real spectacle frame,
- ends of branches of the real spectacle frame,
- segment of the real spectacle frame including at least one of said bridge and a nasal part.

8. The method according to anyone of claims 2 to 7, wherein said real spectacle frame includes reals lenses, the method comprising :
- identifying furthermore, in said picture, said real lenses, and
- replacing said real lenses by virtual lenses in said picture,
and wherein a neural network uses data of ametropia of the wearer for displaying in said picture virtual lenses in the virtual spectacle frame, said virtual lenses being displayed by taking into account said ametropia of the wearer.

9. The method according to anyone of the precedent claims, wherein the spectacle frame outline determination is performed by a module implementing a model of semantic segmentation to identify a plurality of distinct portions of said spectacle frame in said picture.

10. The method according to claim 9, wherein the method comprises:
- a preliminary step of training a deep learning neural network on an annotated database comprising a plurality of portions of learning pictures of spectacle frames segments, each learning picture portion being associated with a mask describing a frame element appearing in said learning picture and a position of this frame element on said learning picture, so as to build said model of semantic segmentation.

11. The method according to anyone of the precedent claims, wherein said outline determination is performed under an eye care professional's control, and the method comprises:
- implementing said artificial intelligence to draw on said picture at least characteristic points delimiting the determined outline of the frame, and displaying, on a computer screen at a disposal of the eye care professional, said picture with said characteristic points,
- implementing a human/machine interface to receive an input from the eye care professional, of data of a validation or of an invalidation of the outline determination implemented by said artificial intelligence, and
- updating said artificial intelligence on the basis of said input data.

12. The method according to claim 11, wherein said data of invalidation of the outline determination comprises data of points of the outline, corrected by the eye care professional.

13. The method according to anyone of claims 11 and 12, wherein said data of points of the outline, corrected by the eye care professional, are transmitted from the human/machine interface with an identifier of the eye care professional, and a counter value of a number of data of outline points corrected by said eye care professional is stored in a memory along with said identifier of the eye care professional.

14. The method according to anyone of claims 11 to 13, wherein said artificial intelligence implements a deep learning neural network, and wherein said neural network is trained on the basis of the eye care professional data of a validation or of an invalidation of the outline determination.

15. The method of claim 14, wherein said neural network is trained furthermore on the basis of eye care professionals' data of validation or of invalidation of frame outline determinations, transmitted to a collaborative platform.

16. The method according to anyone of claims 11 to 15, wherein said outline determination is performed on spectacles comprising lenses and said outline determination comprises a determination of at least one lens contour.

17. The method according to anyone of claims 11 to 16, wherein said outline determination is performed on the basis of a plurality of pictures taken from different view angles relatively to the wearer and wherein said outline determination is performed on spectacles comprising bevels housing lenses, and said outline determination comprises a determination of an outline of said bevels.

18. A device for measuring at least one fitting parameter of a spectacle frame on a wearer, comprising a processor to implement the method according to anyone of the precedent claims.

19. A computer program comprising instructions to implement the method according to anyone of claims 1 to 17 when such instructions are executed by a processor.
